# EUROPÄISCHE PATENTANMELDUNG

(11) **EP 1 101 417 A1**
(43) Veröffentlichungstag der Anmeldung: **23.05.2001**
(21) Anmeldenummer: 99122659.8
(22) Anmeldetag: 15.11.1999
(51) Int. Cl.: A41D 31/00, B32B 27/12

(54) **Textilgewebe für Schutzkleidung mit Reflexionsbeschichtung**

(71) Anmelder: IBENA Textilwerke Beckmann GmbH, 46414 Rhede (DE)
(72) Erfinder: Smeulders, Britta, 7131 Lichtenvoorde (NL)
(74) Vertreter: Weisse, Jürgen, Dipl.-Phys.

(57) **Zusammenfassung**

Die Erfindung betrifft ein Textilgewebe (10) für Schutzbekleidung mit einer reflektierenden Schutzschicht (14), wobei die reflektierende Schutzschicht (14) Goldfarbpigmente (16) enthält

## Beschreibung

### Technisches Gebiet

Die Erfindung betrifft ein Textilgewebe für Schutzbekleidung mit einer reflektierenden Schutzschicht.

### Stand der Technik

Schutzbekleidung mit einer reflektierenden Schutzschicht wird besonders bei der Herstellung von Stahl oder Aluminium benötigt. Bei der Produktion von Stahl oder Aluminium sind die Arbeiter an den Hochöfen starker Wärmestrahlung ausgesetzt. Zum Schutz gegen diese Wärmestrahlung bekleiden sich die Arbeiter mit Schutzbekleidung, die die Wärmestrahlung möglichst gut reflektiert. Solche gut reflektierende Schutzbekleidung werden bereits zahlreich als Schutzanzüge, Schürze, Jacken, Hosen Handschuh und Schuh bzw. Überschuh verwendet. Es ist bekannt, für die reflektierende Schutzschicht Aluminium- oder silberne Farbpigmente zu verwenden.

Die verwendeten Textilgewebe für die Schutzbekleidung sind zudem als eine relativ dicke und schwere Isolationsschicht ausgebildet oder weisen eine solche Isolationsschicht zusätzlich auf.

Durch die Dicke der Schutzanzüge geraten besonders in wärmeren Ländern die Arbeiter sehr stark ins Schwitzen. Die Anzüge werden daher ungern getragen und eher als lästig empfunden. Es sind Textilgewebe geläufig, die atmungsaktiv sind. Diese Textilgewebe haben Mikroporen, durch die Feuchtigkeit nach außen und frische Luft nach innen geführt wird.

Die Textilgewebe für Schutzanzüge an Hochöfen sind aufgrund ihrer Verwendung in der Regel schwer oder gar nicht entflammbar.

Es sind weiterhin Visiere für Schutzhelme bekannt, die mit Goldfarbpigmenten beschichtet sind. Solche Visiere werden mit Goldfarbpigmenten beschichtet, weil Gold über einen höheren Reflexiongrad verfügt, wie Silber bzw. Aluminium.

Goldfarbene und auch isolierte Modekleidung wird schon seit langem zum modischen Kleiden verwendet.

Nachteil der bekannten Schutzbekleidung ist, daß sie durch die notwendige Isolationsschicht schwer, unbequem und steif wird.

### Offenbarung der Erfindung

Aufgabe der Erfindung ist es daher, ein Textilgewebe für Schutzbekleidung und ein Verfahren zur Erstellung eines solchen Textilgewebes zu schaffen, daß eine geringere Isolationsschicht benötigt und damit weniger unbequem und steif wird.

Erfindungsgemäß wird die Aufgabe durch ein Textilgewebe für Schutzbekleidung mit einer reflektierenden Schutzschicht gelöst, bei dem die reflektierende Schutzschicht Goldfarbpigmente enthält.

Weiterhin wird die Aufgabe durch ein Verfahren zum Erstellen von Textilgewebe für Schutzbekleidung mit einer reflektierenden Schutzschicht gelöst, bei dem das Textilgewebe mit einer Folie kaschiert wird, bei der Goldfarbpigmente aufgedampft werden.

Die Erfindung beruht auf dem Effekt, daß eine goldfarbene Schicht ein besseres Reflexionsvermögen aufweist, als eine silberfarbene Schicht. Die Goldschicht reflektiert nämlich die Wärmestrahlung um 5 bis 10% besser als eine Silberschicht. Dadurch absorbiert der Anzug weniger Wärme und benötigt hierdurch eine dünnere Isolationsschicht, als es bei herkömmlichen Schutzanzügen erforderlich wäre. Damit wird das Textilgewebe erheblich dünner, elastischer und auch leichter. Dies sorgt für eine relativ leichte und bequeme Schutzbekleidung auch für Arbeitsfelder, wie Hochöfen bei der Aluminum oder Stahlherstellung.

Vorteilhafterweise ist das verwendete Textilgewebe als Isolationsschicht ausgebildet, bei der die reflektierende Schutzschicht als Folie ausgebildet ist, die auf dem Textilgewebe aufgebracht wird. Eine weitere vorteilhafte Ausgestaltung der Erfindung ist, wenn das Textilgewebe aus einem schwer oder nicht entflammbaren Material besteht.

Für eine gute Atmungsaktivität können Mikroporen im Textilgewebe sorgen, die in einer geeigneten Ausgestaltung bewirken, daß aus dem Textilgewebe eine semipermeable Membran wird.

Eine weitere günstige Ausgestaltung der Erfindung ergibt sich, wenn die Schutzbekleidung als Schutzanzug, Schürze, Jacke, Hose Handschuh und Schuh bzw. Überschuh ausgestaltet ist.

Vorteilhafterweise lassen sich bei der Schutzbekleidung Teilbereiche entfernen, so daß nur bestimmte Bereiche, die geschützt werden müssen, bekleidet sind. Für die Verwendung bei Hitzequellen ist bei der Schutzbekeidung in einer bevorzugten Ausführung ein Panikverschluß vorgesehen. Damit kann die Kleidung im Nottfall schnell geöffnet und vom Leib gerissen werden.

Weitere Vorteile ergeben sich aus dem Gegenstand der Unteransprüche.

### Kurze Beschreibung der Zeichnung

- Fig. 1: zeigt einen Schnitt durch ein erfindungsgemäßes Textilgewebe.
- Fig. 2: zeigt einen Anzug aus einem erfindungsgemäßen Textilgewebe.

### Bevorzugtes Ausführungsbeispiel

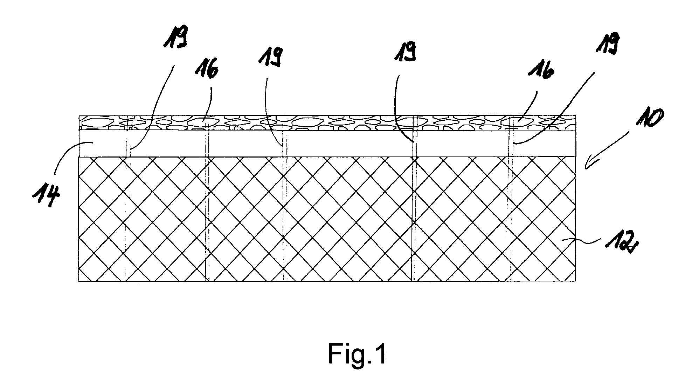

In Fig. 1 wird in stark vergrößerter Darstellung ein Schnitt durch ein erfindungsgemäßes Textilgewebe 10 gezeigt. Das Textilgewebe 10 besteht aus einer Isolierschicht 12, auf der eine Folie 14 aufkaschiert ist. Die Folie 14 ist auf der vom Textilgewebe 10 wegzeigenden Seite mit Goldfarbpigmenten 16 bedampft. Der Grad der Bedampfung mit Goldfarbpigmenten 16 ist so groß, daß die Folie 14 optimal reflektiert. Die Folie 14 besteht vorzugsweise aus einem flammenhemmenden Material. Auch die Isolierschicht 12 besteht aus einem schwer entflammbaren Material. Das Material in diesem Ausführungsbeispiel für die Isolierschicht 12 setzt sich aus 70% preoxidiertem Polyacrylnitril und 30% Para-Armid zusammen. Mit 19 werden in dieser Darstellung Mikroporen bezeichnet, die sich im Querschnitt als dünne Kanäle durch das Gewebe ziehen. Die Mikroporen 19 sorgen für einen guten Luftaustausch. Die Feuchtigkeit kann nach außen dringen und frische Luft kann nach innen gelangen.

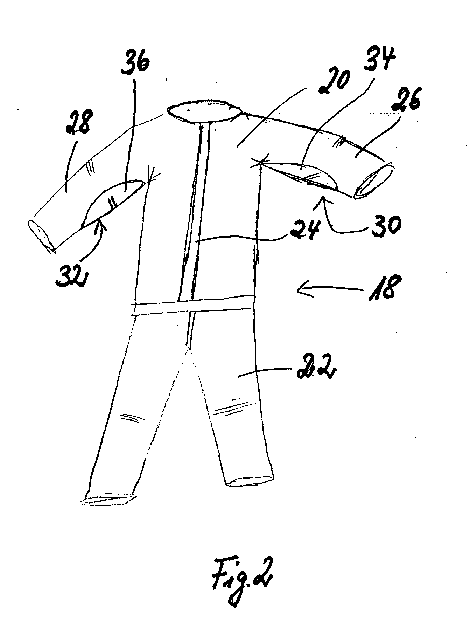

In Fig. 2 wird ein Anzug 18 aus einem erfindungsgemäßen Textilgewebe 10, wie es zu Fig. 1 beschrieben wurde, dargestellt. Der Anzug 18 besteht aus einem Oberteil 20 für den Oberkörper und einem Unterteil 22 für den Beinbereich. Sowohl das Oberteil 20 als auch das Unterteil 22 verfügen über einen Panikverschluß 24. Dieser Panikverschluß 24 dient dazu, die Kleider im Notfall sehr schnell vom Körper herunter zu reißen. An Ärmeln 26 und 28 sind Bereiche 30 bzw. 32, die von der Hitze nicht sonderlich stark betroffen sind. In diesen Bereichen 30, 32 sind Teile 34, 36 entfernbar vorgesehen. Häufig reicht es aus, daß die Teile 34, 36 lediglich weggeklappt werden.

## Patentansprüche

1. Textilgewebe (10) für Schutzbekleidung mit einer reflektierenden Schutzschicht (14), **dadurch gekennzeichnet, daß** die reflektierende Schutzschicht (14) Goldfarbpigmente (16) enthält.

2. Textilgewebe (10) nach Anspruch 1, **dadurch gekennzeichnet, daß** das Textilgewebe (10) als Isolationsschicht (12) ausgebildet ist.

3. Textilgewebe (10) nach einem der Ansprüche 1 oder 2, **dadurch gekennzeichnet, daß** eine die reflektierende Schutzschicht als Folie(14) ausgebildet ist, die auf dem Textilgewebe (10) vorgesehen ist.

4. Textilgewebe (10) nach einem der Ansprüche 1 bis 3, **dadurch gekennzeichnet, daß** das Textilgewebe (10) aus einem schwer oder nicht entflammbaren Material besteht.

5. Textilgewebe (10) nach einem der Ansprüche 1 bis 4, **dadurch gekennzeichnet, daß** das Textilgewebe (10) Mikroporen (19) aufweist.

6. Textilgewebe (10) nach einem der Ansprüche 1 bis 5, **dadurch gekennzeichnet, daß** das Textilgewebe (10) als semipermeable Membran ausgebildet ist.

7. Textilgewebe (10) nach einem der Ansprüche 1 bis 6, **dadurch gekennzeichnet, daß** die Schutzbekleidung als Schutzanzug (18), Schürze, Jacke (20) oder Hose (22) ausgestaltet ist.

8. Textilgewebe (10) nach einem der Ansprüche 1 bis 6, **dadurch gekennzeichnet, daß** die Schutzbekleidung als Schuh, Überschuh oder Handschuh ausgestaltet ist.

9. Textilgewebe (10) nach einem der Ansprüche 7 oder 8, **dadurch gekennzeichnet, daß** von der Schutzbekleidung Teilbereiche (34, 36) entfernbar sind.

10. Textilgewebe (10) nach einem der Ansprüche 7 bis 9, **dadurch gekennzeichnet, daß** ein Panikverschluß (24) vorgesehen ist.

11. Verfahren zum Erstellen von Textilgewebe (10) für Schutzbekleidung mit einer reflektierenden Schutzschicht, **dadurch gekennzeichnet, daß** ein Textilgewebe (10) mit einer Folie (14) kaschiert wird, bei der Goldfarbpigmente (16) aufgedampft werden.

12. Verfahren zum Erstellen von Textilgewebe (10) für Schutzbekleidung nach Anspruch 11, **dadurch gekennzeichnet, daß** die Folie (14) im Vakuum bedampft wird.
